# EUROPEAN PATENT APPLICATION

(11) **EP 2 025 537 A1**
(43) Date of publication of application: **18.02.2009**
(21) Application number: 07744281.2
(22) Date of filing: 28.05.2007
(51) Int. Cl.: B60H 1/00, B60H 1/12

(54) **AIR CONDITIONER UNIT FOR VEHICLE**

(30) Priority: 30.05.2006 JP 2006150586
(71) Applicant: Calsonic Kansei Corporation, Saitama-shi Saitama 331-8501 (JP)
(72) Inventor: OHNEDA, Toshiyuki Calsonic Kansei Corporation, Saitama 331-8501 (JP)
(74) Representative: Grünecker, Kinkeldey, Stockmair & Schwanhäusser Anwaltssozietät
(86) International application number: PCT/JP2007/060847
(87) International publication number: WO 2007/139078

(57) **Abstract**

An air conditioner unit for a vehicle (3) includes a heater core (8) having a pair of left and right tank portions (17, 18), an air passage (6) in which a heater core (8) is placed, foot outlets (33, 34) through which air which passed through the air passage (6) flows, a pair of left and right foot outlets (14, 15) in a passenger room placed in the passenger room (1), and a pair of left and right foot ducts (12, 13). The foot ducts (12, 13) bring the foot outlets (33, 34) and the foot outlets (14, 15) in the passenger room into communication with each other, and cover the tank portions (17, 18). Foot air passages (12a, 13a) which can receive heat from the tank portions (17, 18) are formed in the foot ducts (12, 13).

## Description

### TECHNICAL FIELD

The present invention relates to an air conditioner unit for a vehicle provided in an automobile, and more particularly to an air conditioner unit for a vehicle in which left and right sides of a unit case are provided with a pair of left and right foot air ducts which introduce conditioned air to a foot outlet.

### BACKGROUND ART

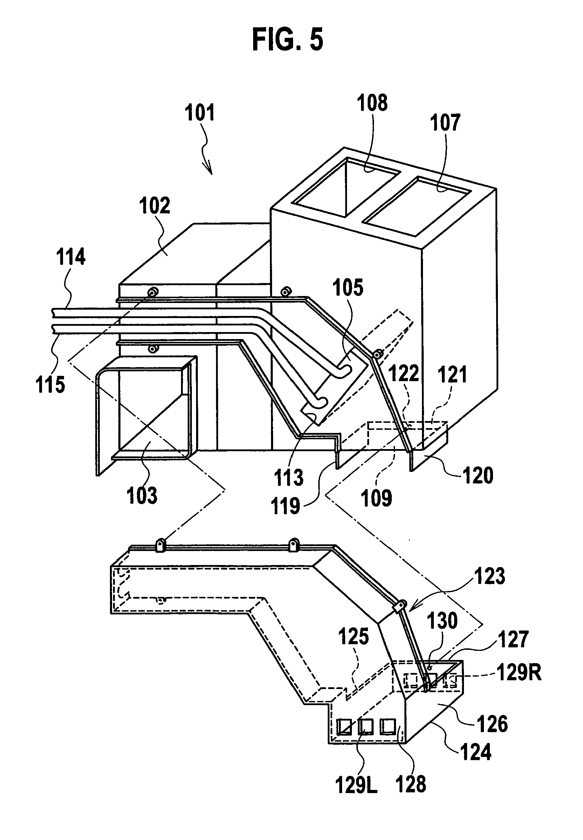

Japanese Patent Application Laid-open No. H9-48229 discloses "air conditioning unit" as a conventional technique of this kind. According to this conventional air conditioning unit, as shown in Fig. 5, an evaporator (not shown) and a heater core 105 are placed downstream of an opening 103 in a unit case 102 in this order along a traveling direction of a vehicle.

An air mix door (not shown) is placed between the evaporator and the heater core 105. The air mix door adjusts a ratio of air which passes through the heater core 105 after it passes through the evaporator, and air which bypasses the heater core 105 after it passes through the evaporator.

A vent opening 107, a defrost opening 108 and a foot opening 109 are provided downstream of the heater core 105. Air whose temperature is adjusted by the evaporator or the heater core 105 is discharged from the vent opening 107, the defrost opening 108 and the foot opening 109.

The vent opening 107 and the defrost opening 108 are opened at an upper portion of the unit case 102 located above the heater core 105. The foot opening 109 is opened at a lower surface of the unit case 102. Blowout dampers (not shown) are turnably placed in front of the vent opening 107, the defrost opening 108 and the foot opening 109. The blowout dampers are a vent damper (not shown) which opens and closes the vent opening 107 is provided in front of the vent opening 107, a defrost damper (not shown) which opens and closes the defrost opening 108 is provided in front of the defrost opening 108, and a foot damper (not shown) which opens and closes the foot opening 109 is provided in front of the foot opening 109.

In this air conditioning unit, air sent from a blower (not shown) is cooled by the evaporator in a state where a cooling cycle is operating, the air is heated by the heater core 105 in accordance with an opening degree of the air mix door, and the air is sent out from the openings (the vent opening 107, the defrost opening 108 and the foot opening 109) which are opened by the blowout dampers.

The heater core 105 is inserted into the unit case 102 along a widthwise direction of an air passage through an inserting portion 113 opened in a side surface of the unit case 102. Pipes 114 and 115 through which warm water (engine cooling water) circulated to the heater core 105 are pulled from the inserting portion 113 to the outside of the unit case 102. The pipes 114 and 115 are placed from the portions pulled out from the unit case 102 toward the engine room along an outer side surface of the unit case 102.

The foot opening 109 is formed into a rectangular shape, for example. The foot opening 109 is provided with a first guide piece 119, a second guide piece 120 and a third guide piece 121 as a stopper. The first and second guide pieces 119 and 120 are formed such as to extend downward from two sides which form a right angle with respect to a side surface of the unit case 102 in the foot opening 109. The third guide piece 121 is formed on a side located on the opposite side from the pulling out side of the pipes 114 and 115 in the foot opening 109. A downward projecting amount of the third guide piece 121 is smaller than those of the first and second guide pieces 119 and 120. The third guide piece 121 is formed with an engaging projection 122 projecting inward of the foot opening 109.

The foot duct 123 includes a box-like duct main body 124 whose upper surface is opened. A width of the duct main body 124 in the traveling direction of the vehicle is substantially equal to a distance between the first and second guide pieces 119 and 120. A width of the duct main body 124 which intersects with a width of the vehicle in the traveling direction at right angles corresponds to a projecting length of one end of the duct main body 124 from a side surface of the unit case 102 in a state where the other end of the duct main body 124 abuts against the third guide piece 121. The surfaces of the duct main body 124 which are opposed to each other in the traveling direction of the vehicle are defined as first and second surfaces 125 and 126, and surfaces of the duct main body 124 which are opposed to each other in the direction intersecting with the traveling direction of the vehicle are defined as a third surface 127 and a fourth surface 128. The third surface 127 is formed with a right foot outlet 129R from which hot air whose temperature was adjusted in the unit case 102 is discharged towards feet. The fourth surface 128 is formed with a left foot outlet 129L from which hot air whose temperature was adjusted in the unit case 102 is discharged towards feet. The right foot outlet 129R of the third surface 127 does not interfere with the third guide piece 121. An engaging hole 130 is formed in the third surface 127 above the right foot outlet 129R. The engaging projection 122 formed on the third guide piece 121 is inserted into the engaging hole 130.

In such a conventional technique having the foot duct 123, there is a problem that temperatures of conditioned air discharged from the right foot outlet 129R and the left foot outlet 129L become uneven. That is, hot air from the foot opening 109 is discharged directly from the right foot outlet 129R, but a mixture of hot air from the foot opening 109 and air further heated by the pipes 114 and 115 in the foot duct 123 is discharged from the left foot outlet 129L. With this structure, hot air which is higher in temperature than that from the right foot outlet 129R is supplied into a passenger room from the left foot outlet 129L.

### DISCLOSURE OF THE INVENTION

It is an object of the present invention to provide an air conditioner unit for a vehicle capable of discharging conditioned air of uniform temperature from left and right foot outlets utilizing heat radiated from a pipe for auxiliary heating of air discharged from a foot side.

The air conditioner unit for a vehicle according to the present invention comprises a unit case in which an air passage is provided, a heat exchanger which has a core portion for heat-exchanging between a heat medium flowing in the air conditioner unit for a vehicle and air flowing outside, and a pair of left and right tank portions which are connected to each other through the core portion and in which the heat medium flows, and which is placed in the unit case in a state where the core portion is located in the air passage and the pair of left and right tank portions are exposed from side surfaces of the unit case, a foot outlet which is provided in the unit case and through which air passing through the air passage flows, a pair of left and right foot outlets in a passenger room for each of the tank portions, and a pair of left and right foot ducts provided for each of the foot outlets in the passenger room. Each of the foot ducts brings the foot outlet and the foot outlet in the passenger room corresponding to the foot duct into communication with each other, each of the foot ducts is placed on a side surface of the unit case in a state where each of the foot ducts covers the tank portion exposed from the unit case in correspondence with the foot outlet in the passenger room, and a foot air passage is formed in the foot duct such that the foot air passage can receive heat from the tank portion.

In the air conditioner unit for a vehicle of the present invention, it is preferable that the foot outlet is formed above the heat exchanger, and each the foot duct is formed from the foot outlet corresponding to the foot duct along a longitudinal direction of the tank portion corresponding to the foot outlet.

Further, in the air conditioner unit for a vehicle of the present invention, it is preferable that the core portion includes a plurality of tubes which connects the pair of left and right tank portions with each other and through which a heat medium flows, and a plurality of corrugated fins, and the tubes and fins are laminated alternately in a vertical direction.

### BRIEF DESCRIPTION OF THE DRAWINGS

[Fig. 1] Fig. 1 is a sectional view of an air conditioner unit for a vehicle according to an embodiment of the present invention.
[Fig. 2] Fig. 2 is a sectional view of the air conditioner unit for a vehicle taken along a longitudinal direction of the vehicle according to the embodiment of the present invention.
[Fig. 3] Fig. 3 is a perspective view of the air conditioner unit for a vehicle according to the embodiment of the present invention.
[Fig. 4] Fig. 4 shows a front portion of a passenger room having the air conditioner unit for a vehicle according to the embodiment of the present invention viewed from inside of the passenger room.
[Fig. 5] Fig. 5 is a perspective view of a conventional air conditioner unit.

### BEST MODE FOR CARRYING OUT THE INVENTION

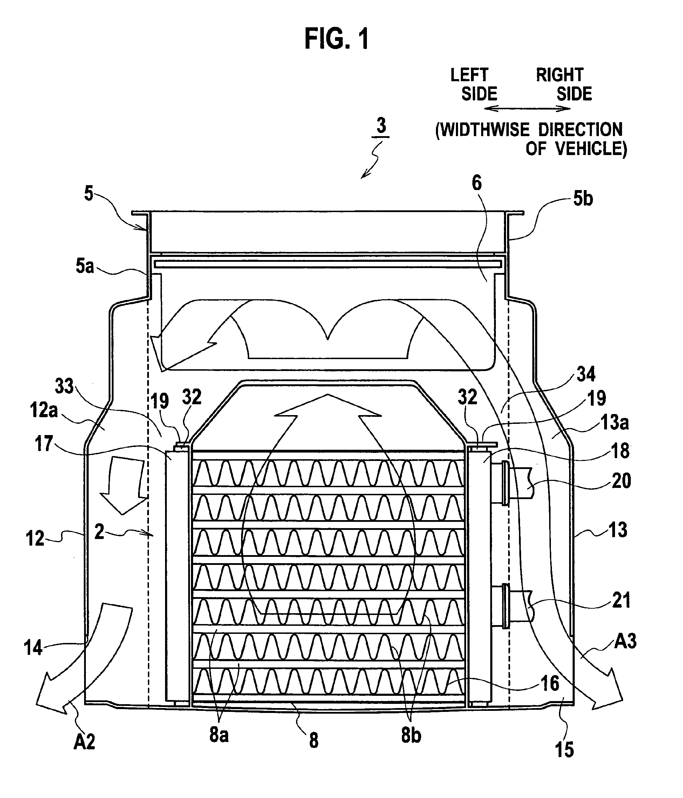

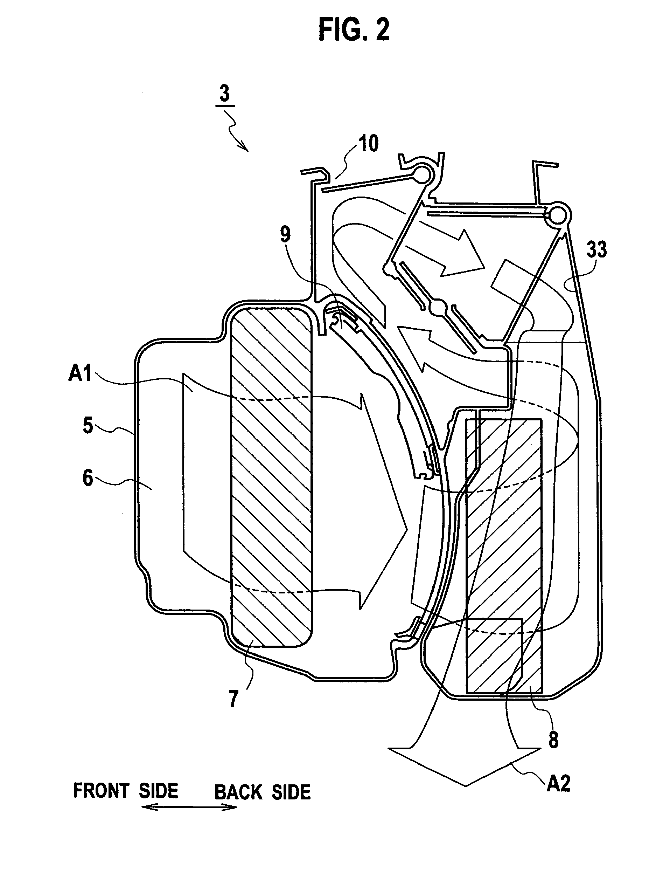

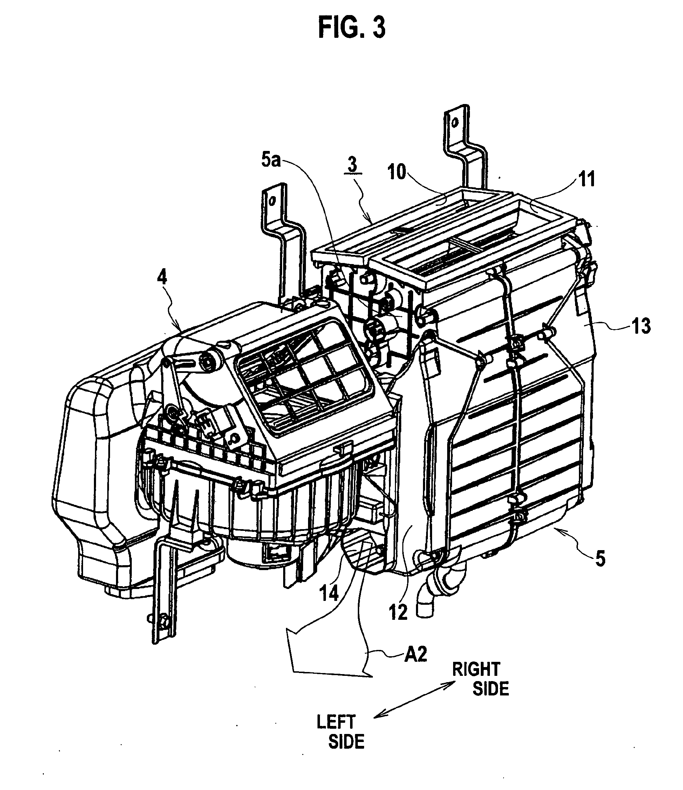

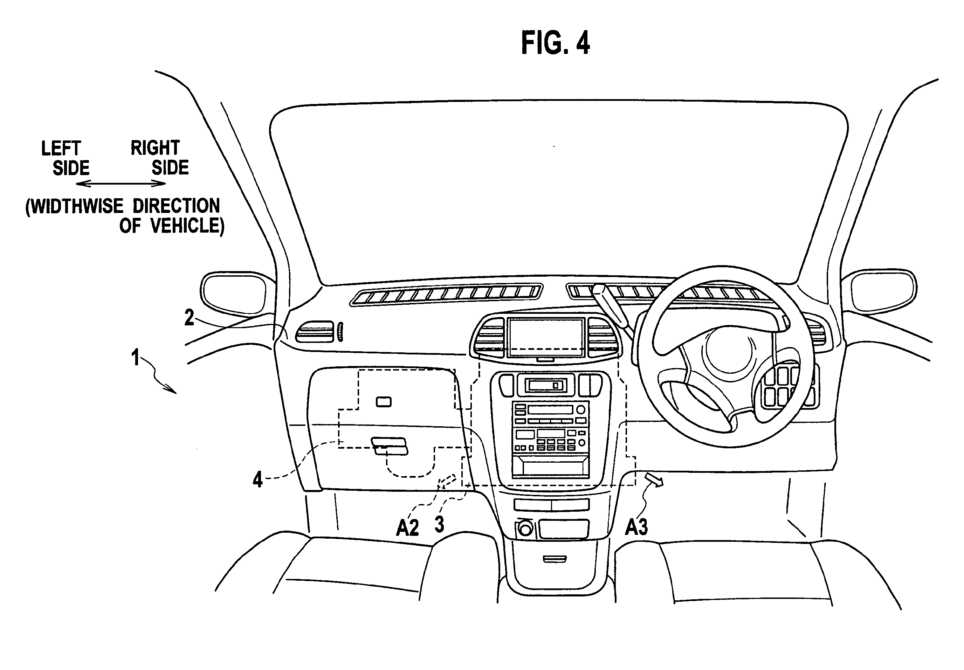

An embodiment of the present invention will be explained with reference to the drawings. Fig. 1 is a sectional view of an air conditioner unit for a vehicle according to the embodiment, Fig. 2 is a sectional view of the air conditioner unit taken along a longitudinal direction of the vehicle, Fig. 3 is a perspective view of the air conditioner unit, and Fig. 4 shows a front portion of a passenger room having the air conditioner unit viewed from inside of the passenger room.

As shown in Fig. 4, an instrument panel 2 is provided at a front portion of the passenger room 1. An air conditioner unit for a vehicle 3 is accommodated in a central portion of the instrument panel 2 in a widthwise direction of the vehicle, and a blower 4 is accommodated in a left side of the air conditioner unit 3 (on the side of a passenger seat of an automobile with right-hand drive) as viewed from inside of the passenger room 1.

As shown in Figs. 1 and 2, in the air conditioner unit 3, an air passage 6 is formed in a unit case 5. An evaporator 7 which cools air flowing through the air passage 6, a heater core 8 as a heat exchanger which is located downstream of the evaporator 7 and which heats air flowing through the air passage 6, and a mix door 9 which distributes, at predetermined ratio, air which passed through the evaporator 7 into air to be introduced into the heater core 8 and air which bypasses the heater core 8, and adjusts a temperature of air are provided in the air passage 6. As shown in Figs. 1 to 3, a defrosting outlet 10, a vent outlet 11 and a pair of left and right foot outlets 33 and 34 are placed at an upper portion in the unit case 5 and above the heater core 8. The air conditioner unit 3 includes a pair of left and right foot outlets 14 and 15 in the passenger room provided in the unit case 5, and a pair of left and right foot duct 123 provided on a side surface of the unit case 5.

As shown in Fig. 1, the heater core 8 includes a core portion 16 which heat-exchanges between a heat medium flowing in the heater core 8 and air flowing outside, and a pair of left and right left tank portion 17 and right tank portion 18 (hereinafter, also called tank portions 17 and 18). The tank portions 17 and 18 are connected to each other through the core portion 16, and the heat medium flows through the tank portions 17 and 18. The heater core 8 is placed in the unit case 5. The heat medium is fluid, more specifically, the heat medium is engine cooling water in the present embodiment.

The core portion 16 includes a plurality of cylindrical tubes 8a, and corrugated fins 8b. The tubes 8a connect the pair of left and right tank portions 17 and 18 with each other, and heat medium flows through the tank portions 17 and 18. The tubes 8a and fins 8b are laminated alternately in the vertical direction. In the core portion 16, air flows along outer surfaces of the fins 8b between the tubes 8a which are outside of the heater core 8, and the air can pass through the core portion 16.

The core portion 16 is located in the air passage 6. The pair of left and right tank portions 17 and 18 are exposed from the side surfaces of the unit case 5. The pair of left and right tank portions 17 and 18 exposed from the side surfaces of the unit case 5 are covered with foot ducts 12 and 13. The pair of left and right tank portions 17 and 18 is placed such that their longitudinal directions extend along a vertical direction of the vehicle. A pipe 20 through which heat medium (engine cooling water) which becomes a heat source of the heater core 8 is supplied to the right tank portion 18, and a pipe 21 through which heat medium in the right tank portion 18 is discharged are connected to the right tank portion 18. A seal member 32 is interposed between peripheral surfaces of the pair of left and right tank portions 17 and 18 and an inner peripheral surface of a support member 19.

Air which passed through the air passage 6 flows through the pair of left and right foot outlets 33 and 34. In the present embodiment, the foot outlets 33 and 34 are provided in each of the tank portions 17 and 18 of the heater core 8. In the following descriptions, the left side foot outlet 33 is also called a left foot outlet 33, and the right side foot outlet 34 is also called a right foot outlet 34.

The pair of left and right foot outlets 14 and 15 in the passenger room are provided in the passenger room 1 in each of the tank portions 17 and 18 of the heater core 8. In the following descriptions, the left side foot outlet 14 in the passenger room is also called a left foot outlet 14 in the passenger room and the right side foot outlet 15 in the passenger room is also called a right foot outlet 15 in the passenger room.

The pair of left and right foot ducts 12 and 13 is provided for each of the foot outlets 14 and 15 in the passenger room. In the following descriptions, the left side foot duct 12 is also called a left foot duct 12, and the right side foot duct 13 is also called a right foot duct 13. The left foot duct 12 covers the left tank portion 17 from the left foot outlet 33, and is in communication with the left foot outlet 14 in the passenger room located below the unit case 5. The right foot duct 13 also covers the right tank portion 18 from the right foot outlet 34, and is in communication with the right foot outlet 15 in the passenger room located below the unit case 5. That is, the foot ducts 12 and 13 bring the foot outlets 33 and 34 corresponding to the foot ducts 12 and 13 and the foot outlets 14 and 15 in the passenger room corresponding to the foot ducts 12 and 13 with each other, and the foot ducts 12 and 13 are placed on the side surfaces of the unit case 5 in a state where they cover the tank portions 17 and 18 exposed from the unit case 5 corresponding to the foot outlets 14 and 15 in the passenger room. The foot ducts 12 and 13 are formed with foot air passages 12a and 13a such that heat can be received from the tank portions 17 and 18 covered with the foot ducts 12 and 13.

Next, the operation of the air conditioner unit 3 is explained. According to the air conditioner unit 3, the blower 4 blows air to the air passage 6 as shown with the arrow A1 in Fig. 2. In the air conditioner unit 3, air is heat-exchanged with respect to the evaporator 7 and the heater core 8, the temperature of air is adjusted by the operation of the mix door 9 and then, the air conditioner unit 3 blows the air into the passenger room 1 as conditioned air. More specifically, in the air conditioner unit 3, as shown with the arrow A2 in Fig. 1, air is sent from the left foot outlet 33 to the left foot outlet 14 in the passenger room through the left foot air passage 12a of the unit case 5, and the air is sent from the left foot outlet 14 in the passenger room forward, leftward and downward of the passenger room 1 as conditioned air. At the same time, as shown with the arrow A3 in Fig. 1, air is sent from the right foot outlet 34 to the right foot outlet 15 in the passenger room through the right foot air passage 13a of the unit case 5, and the air is sent from the right foot outlet 15 in the passenger room forward, rightward and downward of the passenger room 1 as conditioned air.

In the present embodiment, the foot ducts 12 and 13 are formed such that a passage area of the left foot air passage 12a and a passage area of the right foot air passage 13a are substantially equal to each other. A side surface of the left tank portion 17 is exposed in the left foot duct 12, and a side surface of the right tank portion 18 is exposed in the right foot duct 13. Therefore, air (conditioned air) passing through left and right foot ducts 12 and 13 are heated in the same manner in its passing process.

A gap between the inner peripheral surfaces of the tank portions 17 and 18 and the support member 19 is sealed by the seal member 32, and this prevents conditioned air from leaking from the foot ducts 12 and 13.

According to the above-explained air conditioner unit 3, the pair of foot ducts 12 and 13 is placed such as to cover the tank portions 17 and 18 exposed from the side surfaces of the unit case 5, and the foot ducts 12 and 13 are formed with the foot air passages 12a and 13a. Accordingly, conditioned air of substantially equal temperature and in substantially equal quantity can be sent from the left and right foot outlets 14 and 15 in the passenger room with a relatively simple structure.

According to the air conditioner unit 3, when conditioned air passes through the foot ducts 12 and 13, the conditioned air flows from the foot outlets 33 and 34 provided above the heater core 8, and the conditioned air flows along the tank portions 17 and 18. Therefore, the conditioned air can be heated effectively by the tank portions 17 and 18 at that time. With this structure, the unit size can be reduced, and the temperature of conditioned air discharged from the foot outlets 14 and 15 in the passenger room can be set higher than the vent blowout temperature.

The present invention is not limited to the embodiment described above, and various other embodiments can be made without departing from the scope of the present invention.

## Claims

1. An air conditioner unit for a vehicle comprising
a unit case in which an air passage is provided,
a heat exchanger which has a core portion for heat-exchanging between a heat medium flowing in the air conditioner unit and air flowing outside, and a pair of left and right tank portions which are connected to each other through the core portion and in which the heat medium flows, and which is placed in the unit case in a state where the core portion is located in the air passage and the pair of left and right tank portions are exposed from side surfaces of the unit case,
a foot outlet which is provided in the unit case and through which air passing through the air passage flows,
a pair of left and right foot outlets in a passenger room for each of the tank portions, and
a pair of left and right foot ducts provided for each of the foot outlets in the passenger room, wherein
each of the foot ducts brings the foot outlet and the foot outlet in the passenger room corresponding to the foot duct into communication with each other, each of the foot ducts is placed on a side surface of the unit case in a state where each of the foot ducts covers the tank portion exposed from the unit case in correspondence with the foot outlet in the passenger room, and a foot air passage is formed in the foot duct such that the foot air passage can receive heat from the tank portion.

2. The air conditioner unit according to claim 1, wherein the foot outlet is formed above the heat exchanger, and
each of the foot ducts is formed from the foot outlet corresponding to the foot duct along a longitudinal direction of the tank portion corresponding to the foot outlet.

3. The air conditioner unit according to claim 1 or 2, wherein
the core portion includes a plurality of tubes which connects the pair of left and right tank portions with each other and through which a heat medium flows, and a plurality of corrugated fins, and the tubes and fins are laminated alternately in a vertical direction.
